# EUROPEAN PATENT SPECIFICATION

(11) **EP 2 260 570 B1**
(45) Date of publication and mention of the grant of the patent: **03.08.2011**
(21) Application number: 08719371.0
(22) Date of filing: 17.03.2008
(51) Int. Cl.: H05B 39/04

(54) **AN ARRANGEMENT FOR REDUCING ENERGY ABSORPTION IN STAND-BY MODE AND CORRESPONDING METHOD.**
ANORDNUNG ZUR REDUZIERUNG VON ENERGIEAUFNAHME IM BEREITSCHAFTSMODUS UND ENTSPRECHENDES VERFAHREN
AGENCEMENT DE RÉDUCTION D'ABSORPTION D'ÉNERGIE EN MODE VEILLE ET PROCÉDÉ CORRESPONDANT

(43) Date of publication of application: 15.12.2010
(73) Proprietor: OSRAM Gesellschaft mit beschränkter Haftung, 81543 München (DE); OSRAM S.P.A. - SOCIETA' RIUNITE OSRAM EDISON CLERICI, 20144 Milano (IT)
(72) Inventor: ZANETTE, Francesca, I-32100 Belluno (IT)
(74) Representative: Bosotti, Luciano
(86) International application number: PCT/IB2008/000725
(87) International publication number: WO 2009/115856

(56) References cited:
- JP-A- 11 146 641
- JP-A- 2006 050 760
- US-A- 3 917 960
- US-A1- 2002 071 299
- US-A1- 2002 131 279
- US-A1- 2005 024 903
- US-B1- 6 341 073

## Description

### Field of the invention

This disclosure relates to energy saving techniques, which may be applied during stand-by mode operation of a device.

This disclosure was developed by paying specific attention to its possible use in connection with electronic transformers for halogen lamps which also embed dimming functionalities.

### Description of the related art

As commonly used in the area of lighting appliances, "dimming" denotes the action of regulating the brightness of a light source (e.g. a lamp, such as a halogen lamp or a light emitting diode or LED), by decreasing or increasing the mean power fed to the light source.

The most common way to perform a dimming function involves the use of devices called "dimmers". A frequent distinction of dimmers is between "trailing edge" and "leading edge" dimmers, depending on whether the power transferred to the load is regulated by cutting-off the falling edge or the rising edge of the mains voltage sine waveform, respectively.

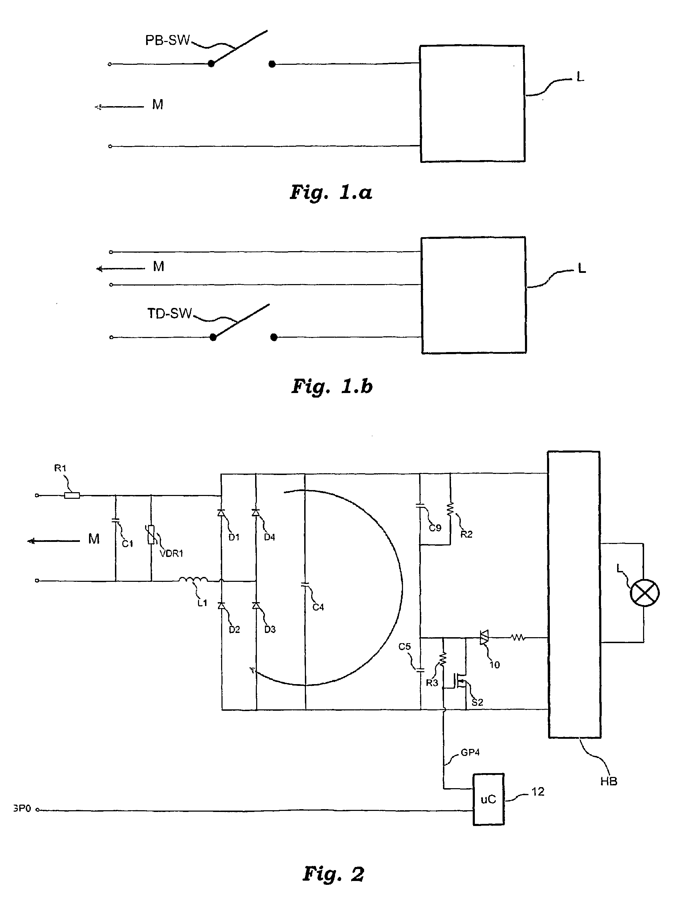

The dimming operation can also be performed directly by an electronic transformer itself. In that case, two approaches, usually called the "push-button" mode and the "touch-dim" mode, are feasible, as schematically illustrated in Figures 1.a and 1.b herein.

These approaches are based on different concepts: in the former, lighting - i.e. feeding the lamp L being dimmed - is managed by a normally closed switch (Figure1.a), while with the latter the control is effected via a normally closed switch (Figure 1.b).

When adopting the "push-button" approach, a switch PB-SW is connected in series with the mains M (phase) and pressing the button causes interruptions of the supply voltage which are detected and used to mirror the user's desired operation. If, conversely, the ballast operates according to the "touch-dim" philosophy, a switch TD-SW is associated with an additional wiring, which represents the additional input necessary to produce the signal to control lighting. The choice of either approach may depend on different factors (comfort of the dimming, the ease of the installation, etc.) and both approaches have advantages and drawbacks as well.

Irrespective of the approach selected, the pressure and the release of the button by the user produce the input signal for a microcontroller, which is the core of the control circuitry. The microcontroller processes the inputs and produces therefrom an output signal, which manages the ballast to turn the light source on and off and performs the dimming action.

The block diagram of Figure 2 shows further details related to how "push-button" and "touch-dim" dimming may be implemented in an electronic transformer for halogen lamps.

The exemplary arrangement of Figure 2 includes a half-bridge converter HB fed from the mains M and comprising a LRC series self-resonant converter.

More in detail, D1, D2, D3, and D4 denote four diodes arranged in a full bridge rectifier configuration, fed from the mains M.

The input stage also includes an EMI filter (L1 and C1), a fuse resistor (R1) and a varistor (VDR1), with the function of providing immunity from bursts and surges.

Another filtering capacitor C4 is connected across the output side of the diode bridge D1 to D4. Cascaded to the capacitor C4 there is a divider formed by a capacitor C9 plus a resistor R2 and a capacitor C5.

The converter HB is driven via a diac 10 connected to the intermediate point of the divider. When the voltage drop on the diac 10 reaches its threshold value (e.g 32V), the diac 10 ignites the half-bridge and the resonance starts.

The capacitor C9 plus the resistor R2 thus form a "pull-up" branch of the divider. The capacitor C5 defines a "control" branch of the divider acted upon by the mosfet S2 driven by the microcontroller 12, which performs the control and dimming functions.

A resistor R3 is connected in parallel to the source-drain path of a mosfet S2 and correctly polarizes the transistor.

The microcontroller 12 receives as an input the signals GP0 coming from the switch PB-SW or TD-SW of figure 1.a and 1.b.

Each time the switch is pressed or released, an interrupt occurs in the microcontroller 12. Depending on the number and/or on the duration of the acts of pressing/releasing the button, the timing of the occurrence of the interrupts is different. In that way, the device is able to "understand" the user's desired level of dimming, or his/her intention to turn on or off the device. The corresponding signal GP4 at the output of the microcontroller 12 is applied to the gate of the N-channel mosfet S2, which drives the diac 10.

As result, when the output of the microcontroller is low, the mosfet S2 is equivalent to an open switch. The diac 10 is supplied and the power circuit HB performs its conventional electronic transformer funtion.

On the contrary, when the output of the microcontroller 12 is high, the mosfet S2 is equivalent to a closed switch, which short-circuits the capacitor C5 and connects the diac 10 to ground, thus preventing the diac 10 from igniting the BJTs in the half bridge HB.

This condition properly corresponds to a "stand-by" mode. This is consistent with the general definition of standby electricity consumption as "the electricity consumption of the appliance in the mode where the appliance does not fulfil its primary technical-economical function but still uses electricity from the mains" (Molinder, Olof 1997, "Study On Miscellaneous Standby Power Consumption of Household Equipment", Omvärden Konsult AB, EU-DG XVII, contract 4.1031/E/96-008).

During standby, the lamp is turned off, but in fact the phase line is not interrupted. As a consequence, during the stand-by mode, a conductive path will exist through the pull-up resistor R2.

A dissipation of power will thus occur on this component.

For instance, in a case where Vin,rms = 230Vrms, Vin_pk=330Vpk, R2=240KΩ, a wasted power of 0.5W has been measured during stand-by.

A reasonable estimate indicates that the light L will be turned off 20 hours per day on average, so that about 4KWh will be dissipated and thus wasted each year. This corresponds to the fact that each device produces 4Kg of CO₂ per year.

### Object and summary of the invention

Despite the extensive use of the arrangement described in the foregoing, the problem of avoiding such an undesired waste of energy, with the ensuing negative energetic and environmental impact, is still unsolved.

The object of the invention is thus to provide a fully satisfactory solution to that problem. According to the present invention, such an object is achieved by means of a device having the features set forth in the claims that follow. The invention also relates to a corresponding method.

The claims are an integral part of the disclosure of the invention provided herein. US2002/071299 A1 discloses an arrangement for driving an electronic half bridge according to the preamble of claims 1 and 10.

Embodiments of this disclosure offer significant advantages in terms of reduction of dissipation in the stand-by mode. In view of very high number of appliances and electronic devices that may include an arrangement as described herein, this disclosure may provide a noteworthy contribution to the efforts devoted to saving energy. Economical savings by the user similarly come into play as an advantage.

### Brief description of the annexed drawings

The invention will now be described, by way of example only, with reference to the enclosed figures of drawing, wherein:
- Figures 1.a, 1.b, and 2 have been already discussed in the foregoing;
- Figure 3 is a general block diagram of the circuit arrangement as described herein;
- Figures 4 and 5 are exemplary of operation of circuit arrangement as described herein; and
- Figure 6 details a possible embodiment of the circuit arrangement as described herein.

### Detailed description of preferred embodiments

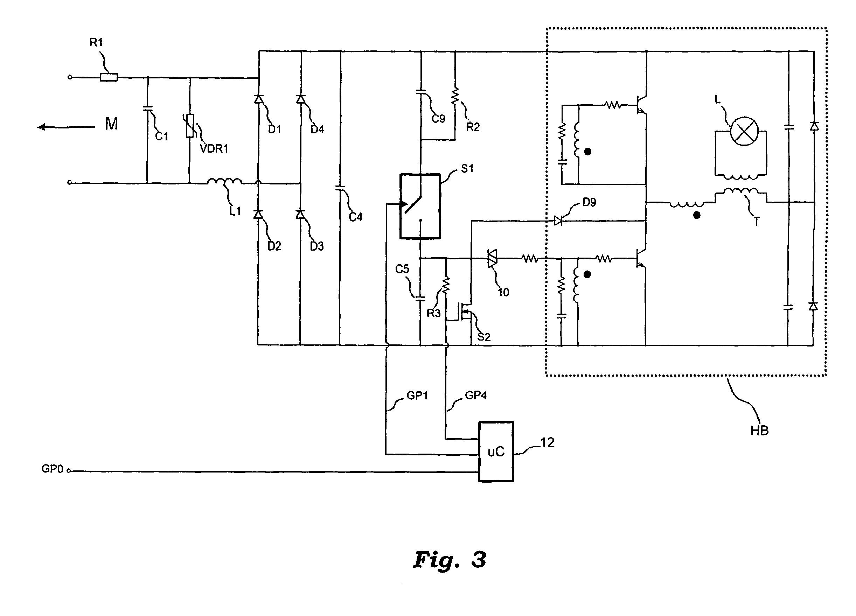

In Figures 3 to 6, elements/components identical or equivalent to those already discussed in the foregoing are indicated with the same references appearing on Figures 1.a, 1.b, and 2 and will not be described again in the following.

Additionally, Figure 3 shows the circuit configuration of a possible embodiment of a half bridge converter HB adapted for driving a lamp L via a transformer T. The configuration as shown is of purely exemplary value and will not be described in detail in the following; in fact, any other half bridge converter configuration known to those of skill in the art and adapted to be driven e.g. via a diac such as the diac 10 can be used within the framework of the arrangement described herein.

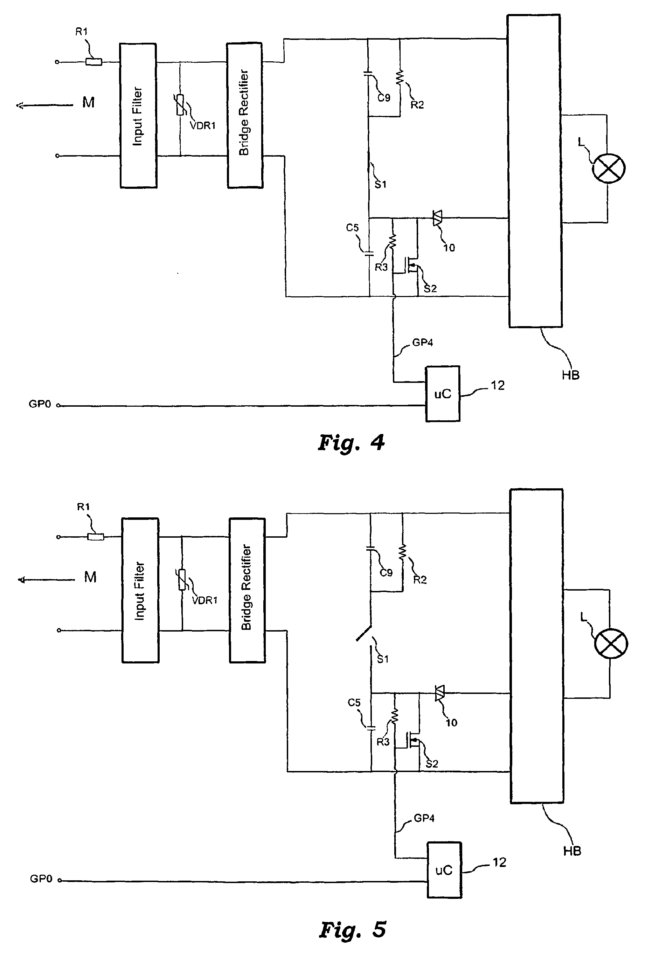

In Figures 4, 5 and 6, the half bridge converter HB is again represented merely as a block in the diagram.

The same also applies to the sets of components provided immediately upstream and downstream of the varistor VDR1, respectively, in Figures 4 and 5: these sets of components are represented simply as blocks labelled "Input Filter" and "Bridge Rectifier". Such schematic representation is dictated by the sake of simplicity of representation and likewise intended to highlight that any other input filter and bridge rectifier configurations known to those of skill in the art can be used within the framework of the arrangement described herein.

Direct comparison of Figures 2 and 3 shows that in the arrangement of Figure 3 a switch S1 (e.g. an electronic switch such as a mosfet) is interposed after the pull-up network, composed by C9 and R2.

The switch S1 is controlled by the microcontroller 12 via the signal GP1 which is synchronized with the signal GP4 in such a way that, when the microcontroller 12 forces the diac 10 to ground, in order to impose stand-by mode operation to the arrangement, the switch S1 will open.

As a result of opening the switch S1, no current will flow through the resistor R2 at stand-by.

The same concept may be implemented in different ways.

In the exemplary embodiment illustrated herein, the switch S1 may be controlled by the processor 12 with a function signal related to the actions of the user on the button (e.g. the signal GP0 input to the microcontroller 12 to indicate the user's desired condition of driving the half bridge converter HB).

The switch S1 may however be controlled also as function of a load signal representative of the output load, i.e. the load represented by the lamp or lamps L, driven by the half bridge converter HB (such a signal may be obtained - in a known manner - e.g. by sensing any parameter which may identify the stand-by mode operation).

Normal operation of the electronic transformer is not affected as the switch S1 is closed, when the user wants to turn on the lamp. Again, this condition may be sensed by detecting the action of the user on the button and/or by means of a signal representative of the output load.

Figure 4 clarifies what happens when the switch S1 is closed: in this situation, the lamp L is on and the brightness level may be regulated. This action is performed, in manner known per se, by the microcontroller 12, which produces at its output a square wave signal, whose duty-cycle is suitably varied. This permits to regulate the amount of power transferred from the input stage to the lamp and, by consequence, the level of brightness. Figure 5, conversely, is representative of what happens when the lamp is turned off by inhibiting the operation of the diac 10: the switch S1 is opened, in order to minimize the power consumption, by preventing current flow through the pull-up resistor R2.

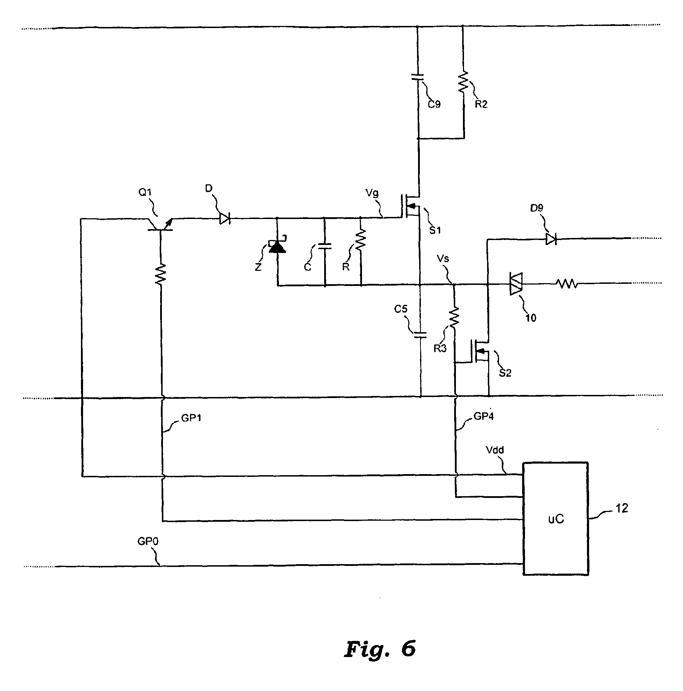

Figure 6 details an embodiment of a circuit for driving the switch S1, by using the signal GP1 from the microcontroller 12. Exploiting the microcontroller 12 (by suitably programming - in a manner know per se - the software functions thereof) to drive the switch S1 is advantageous as it reduces the number of components in the circuit (and the cost related thereto). Besides, the microcontroller 12 will be already configured to "sense" the user's intended operation directly from the interrupts caused by the pressure/release of the button (PB-SW or TD-SW), thus making unnecessary to provide additional sensing circuits.

A bipolar (here n-p-n) transistor Q1 has its base connected to the signal GP1 and its collector connected to a fixed (e.g. 5.1 Volt) supply voltage Vdd from the microcontroller 12. The emitter of the transistor Q1 will drive the gate of the mosfet S1 via a diode D. The emitter of the transistor Q1 is connected to the diac 10 via a parallel connection of a zener diode Z, a capacitor C and a resistor R.

A diode D9 is used to warrant that the voltage drop on the capacitor C5 does not rise above the threshold of the diac 10 (e.g. 32V), when resonance has started, each half period of the supply voltage. In this way, the diac 10 will not continuously ignite the transistor Q2 and so Q2 can turn off.

The voltages on the gate of the mosfet S1 and at the input of the diac 10 will be denoted Vg and Vs, respectively.

During the normal (non stand-by) operation of the exemplary drive arrangement herein, the signal GP1 is high. When the voltage Vs, i.e. the drive voltage of the half bridge converter HB (which can oscillate in the range between zero and 32V) is equal to zero, the diode D is directly polarized and the current flowing through it from the supply line Vdd charges the capacitor C.

In that way, the voltage Vgs (= Vg-Vs) across the gate and the source of the mosfet S1 raises above the threshold value, necessary to turn on the mosfet. The switch S1 closes, so connecting the pull-up RC network (formed by R2 and C9) to the diac 10.

In this situation, the diac 10 is able to ignite the half bridge HB; the on-state and the dimming functionality are thus managed (in a manner know per se) by the signal GP4, which also comes from the microcontroller 12.

The zener diode Z "clamps" and stabilizes the voltage Vgs to a fixed value.

When Vs is higher than Vdd, the diode D is inversely polarized and it does not permit the current to flow. The mosfet S1 is kept "on" by the residual charge on the capacitor C.

The capacitor C and the resistor R are dimensioned in such a way that, even though the capacitor C discharges through the resistor R, the voltage across the capacitor C will not go below the threshold voltage of the mosfet S1, until the next semi-period of the supply voltage: at that point, the voltage Vs will be zero again, and so the diode D will permit current flow again.

The software in the microcontroller 12 may be configured so that the signal GP1 is set low and the transistor Q1 is turned off (i.e. cut-off), when the stand-by mode is recognized. No current is injected form the emitter of the cut-off transistor Q1 and, after an interval dictated by the time constant τ=R·C, the voltage on the capacitor C will no longer be able to sustain the on-state on the mosfet S2, which turns off.

The conductive path through R2 is interrupted and so the dissipation on R2 itself is avoided (see Figure 5) .

The microcontroller 12 will detect the user's action on the push-button (PB-SW or TD-SW), to indicate that the user wants to turn on the lamp L. The microcontroller 12 will thus set the port GP1 to a high level and the situation described in the foregoing, as represented in Figure 4, will be reproduced.

A small delay in turning the lamp L on may ensue, due to the time required for the capacitor C to charge. However, this delay will not be appreciable by the user.

It will be appreciated that the arrangement described herein may be made effective also in the case of stand-by operation caused by the lamp L being broken (burned out).

## Claims

1. An arrangement for driving an electronic half-bridge converter (HB) by means of a drive voltage (Vs) divided out of an RC divider circuit (R2, C9, C5),
wherein said RC divider circuit (R2, C9, C5) includes a pull-up branch (R2, C9) and a control branch (C5),
wherein said half-bridge converter (HB) is driven via a diac (10) connected to the intermediate point of said RC divider circuit (R2, C9, C5), whereby when the voltage drop on said diac (10) reaches its threshold value, said diac (10) ignites said half-bridge converter and resonance starts, wherein said control branch (C5) has coupled thereto a control switch (S2) controllable (12) to short said control branch (C5) to ground for stand-by operation, the arrangement **characterized in that** the arrangement includes an energy saving switch (S1) interposed after said pull-up branch (R2,C9) and before the intermediate point of said RC divider circuit (R2, C9, C5), said energy saving switch (S1) actuatable to decouple said pull-up branch (R2, C9) and said control branch (C5) of said RC divider circuit (R2, C9, C5) to prevent current flow in said pull-up branch (R2, C9) of said voltage divider (R2, C9, C5) thereby avoiding power absorption therein during stand-by operation.

2. The arrangement of claim 1, wherein said energy saving switch (S1) is a semiconductor switch, such as a mosfet.

3. The arrangement of either of claims 1 or 2, including a processor (12) for controlling said control switch (S2) and said energy saving switch (S1) via synchronized signals (GP4, GP1) sent to said control switch (S2) and said energy saving switch (S1).

4. The arrangement of claim 3, wherein said processor (12) is sensitive to an outer control signal (GPO) indicative of a user's desired driving of said electronic half-bridge converter (HB), said processor (12) configured for controlling said control switch (S2) and said energy saving switch (S1) as a function of said outer control signal (GPO).

5. The arrangement of claim 3, wherein said processor (12) is sensitive to a load signal indicative of the load of said electronic half-bridge converter (HB), said processor (12) being configured for controlling said control switch (S2) and said energy saving switch (S1) as a function of said load signal (GPO).

6. The arrangement of any of the previous claims,
wherein said processor (12) is configured for sending to said energy saving switch (S1) both a supply signal and a switch signal (GP1) to produce switching of said energy saving switch (S1).

7. The arrangement of any of the previous claims, including a supplementary switch (Q1) to produce switching of said energy saving switch (S1).

8. The arrangement of claim 7, wherein said supplementary switch (Q1) is a bipolar transistor switchable to a cut off state to actuate said energy saving switch (S1) to decouple said pull-up branch (R2, C9) and said control branch (C5) of said RC divider circuit (R2, C9, C5) to prevent current flow in said pull-up branch (R2, C9) of said voltage divider (R2, C9, C5).

9. The arrangement of either of claims 7 or 8, including an RC network interposed between said supplementary switch (Q1) and said energy saving switch (S1), whereby said supplementary switch (Q1):
- when conductive, permits loading of the capacitance (C) in said RC network to a voltage maintaining said energy saving switch (S1) closed, and
- when non-conductive, causes the capacitance (C) in said RC network to discharge through the resistance (R) in said RC network to switch said energy saving switch (S1) open.

10. A method of driving an electronic half-bridge converter (HB) by means of a drive voltage (Vs) divided out of an RC divider circuit (R2, C9, C5), wherein said RC divider circuit (R2, C9, C5) includes a pull-up branch (R2, C9) and a control branch (C5), wherein said half-bridge converter (HB) is driven via a diac (10) connected to the intermediate point of said RC divider circuit (R2, C9, C5), whereby when the voltage drop on said diac (10) reaches its threshold value, said diac (10) ignites said half-bridge converter and resonance starts, the method including the step of shorting to ground for stand-by operation said control branch (C5) in said RC divider circuit (R2, C9, C5),
the method **characterized in** the step of decoupling, by means of an energy saving switch (S1) interposed after the pull-up branch (R2,C9) and before the intermediate point of said RC divider circuit (R2,C9,C5), during stand-by operation said pull-up branch (R2, C9) and said control branch (C5) of said RC divider circuit (R2, C9, C5) to prevent current flow in said pull-up branch (R2, C9) of said voltage divider (R2, C9, C5) thereby avoiding power absorption therein during stand-by operation.

## Patentansprüche

1. Anordnung zum Treiben eines elektronischen Halbbrücken-Wandlers (HB) durch Mittel einer Treiberspannung (Vs), die aus einer RC-Teilerschaltung (R₂, C₉, C₅) geteilt wird, wobei die RC-Teilerschaltung (R₂, C₉, C₅) einen Pull-up-Zweig (R₂, C₉) und einen Steuerzweig (C₅) aufweist, wobei der Halbbrücken-Wandler (HB) durch eine Zweiweg-Schaltdiode (10) getrieben wird, die an dem Zwischenpunkt der RC-Teilerschaltung (R₂, C₉, C₅) angeschlossen ist, wobei, wenn der Spannungsabfall an der Zweiweg-Schaltdiode (10) seinen Schwellwert erreicht, zündet die Zweiweg-Schaltdiode (10) den Halbbrücken-Wandler und Resonanz beginnt, wobei der Steuerzweig (C₅) dazu einen Steuerschalter (S₂), der steuerbar (12) ist, um den Steuerzweig (C₅) für einen Standby-Betrieb an Masse kurz zu schließen, gekoppelt hat,
wobei die Anordnung **dadurch gekennzeichnet ist, dass** die Anordnung einen Energiesparschalter (S₁) aufweist, der nach dem Pull-up-Zweig (R₂, C₉) und vor dem Zwischenpunkt der RC-Teilerschaltung (R₂, C₉, C₅) angeordnet ist, wobei der Energiesparschalter (S₁), der ansteuerbar ist, um den Pull-up-Zweig (R₂, C₉) und den Steuerzweig (C₅) der RC-Teilerschaltung (R₂, C₉, C₅) zu entkoppeln, um Stromfluss in dem Pull-up-Zweig (R₂, C₉) des Spannungsteilers (R₂, C₉, C₅) zu verhindern, **dadurch** wird Leistungsaufnahme darin während des Standby-Betriebs vermieden.

2. Anordnung nach Anspruch 1, wobei der Energiesparschalter (S₁) ein Halbleiterschalter ist wie zum Beispiel ein Mosfet.

3. Anordnung nach entweder Anspruch 1 oder 2, aufweisend einen Prozessor (12) zum Steuern des Steuerschalters (S₂) und des Energiesparschalters (S₁) durch synchronisierte Signale (GP₄, GP₁), die an den Steuerschalter (S₂) und den Energiesparschalter (S₁) gesendet werden.

4. Anordnung nach Anspruch 3, wobei der Prozessor (12) empfindlich ist für ein äußeres Steuersignal (GPo), das auf ein benutzer-gewünschtes Treiben des elektronischen Halbbrücken-Wandlers (HB) hindeutet, wobei der Prozessor (12) zum Steuern des Steuerschalters (S₂) und des Energiesparschalters (S₁) als eine Funktion des äußeren Steuersignals (GPo) eingerichtet ist.

5. Anordnung nach Anspruch 3, wobei der Prozessor (12) empfindlich ist für ein Lastsignal, das auf eine Last des elektronischen Halbbrücken-Wandlers (HB) hindeutet, wobei der Prozessor (12) zum Steuern des Steuerschalters (S₂) und des Energiesparschalters (S₁) als eine Funktion des Lastsignals (GPo) eingerichtet ist.

6. Anordnung nach irgendeinem der vorhergehenden Ansprüche, wobei der Prozessor (12) eingerichtet ist zum Senden sowohl eines Versorgungssignals als auch eines Schaltsignals (GP₁) an den Energiesparschalter (S₁), um ein Schalten des Energiesparschalters (S₁) zu bewerkstelligen.

7. Anordnung nach irgendeinem der vorhergehenden Ansprüche, aufweisend einen Zusatzschalter (Q₁), um ein Schalten des Energiesparschalters (S₁) zu bewerkstelligen.

8. Anordnung nach Anspruch 7, wobei der Zusatzschalter (Q₁) ein bipolarer Transistor ist, der zu einem Trennzustand schaltbar ist, um den Energiesparschalter (S₁) anzusteuern, um den Pull-up-Zweig (R₂, C₉) und den Steuerzweig (C₅) der RC-Teilerschaltung (R₂, C₉, C₅) zu entkoppeln, um einen Stromfluss in dem Pull-up-Zweig (R₂, C₉) des Spannungsteilers (R₂, C₉, C₅) zu verhindern.

9. Anordnung nach entweder Anspruch 7 oder 8, aufweisend ein RC-Netzwerk, das zwischen dem Zusatzschalter (Q₁) und dem Energiesparschalter (S₁) angeordnet ist, wobei der Zusatzschalter (Q₁):
- wenn leitend, ein Laden der Kapazität (C) in dem RC-Netzwerk auf eine Spannung erlaubt, die den Energiesparschalter (S₁) geschlossen hält, und
- wenn nichtleitend, die Kapazität (C) in dem RC-Netzwerk veranlasst durch den Widerstand (R) in das RC-Netzwerk zu entladen, um den Energiesparschalter (S₁) offen zu schalten.

10. Verfahren zum Treiben eines elektronischen Halbbrücken-Wandlers (HB) durch Mittel einer Treiberspannung (Vs), die aus einer RC-Teilerschaltung (R₂, C₉, C₅) geteilt wird, wobei die RC-Teilerschaltung (R₂, C₉, C₅) einen Pull-up-Zweig (R₂, C₉) und einen Steuerzweig (C₅) aufweist, wobei der Halbbrücken-Wandler (HB) durch eine Zweiweg-Schaltdiode (10) getrieben wird, die an dem Zwischenpunkt der RC-Teilerschaltung (R₂, C₉, C₅) angeschlossen ist, wobei, wenn der Spannungsabfall an der Zweiweg-Schaltdiode (10) seinen Schwellwert erreicht, zündet die Zweiweg-Schaltdiode (10) den Halbbrücken-Wandler und Resonanz beginnt, wobei das Verfahren den Schritt an Masse kurz schließen für einen Standby-Betrieb des Steuerzweigs (C₅) in der RC-Teilerschaltung (R₂, C₉, C₅) aufweist,
wobei das Verfahren **gekennzeichnet ist, durch** den Schritt eines Entkoppelns **durch** Mittel eines Energiesparschalters (S₁), der nach dem Pull-up-Zweig (R₂, C₉) und vor dem Zwischenpunkt der RC-Teilerschaltung (R₂, C₉, C₅) angeordnet ist, während des Standby-Betriebs des Pull-up-Zweigs (R₂, C₉) und des Steuerzweigs (C₅) der RC-Teilerschaltung (R₂, C₉, C₅), um den Stromfluss in dem Pull-up-Zweig (R₂, C₉) des Spannungsteilers (R₂, C₉, C₅) zu verhindern, **dadurch** wird Leistungsaufnahme darin während Standby-Betrieb vermieden.

## Revendications

1. Une configuration pour piloter un convertisseur électronique demi-pont (HB) au moyen d'une tension de pilotage (Vs) divisée à partir d'un circuit diviseur RC (R2, C9, C5), dans lequel ledit circuit diviseur RC (R2, C9, C5) comprend une branche d'excursion haute (R2, C9) et une branche de contrôle (C5), dans lequel ledit convertisseur demi-pont (HB) est piloté via un diac (10) connecté au point milieu dudit circuit diviseur RC (R2, C9, C5), de sorte que lorsque la chute de tension sur ledit diac (10) atteint sa valeur de seuil, ledit diac (10) allume ledit convertisseur demi-pont et amorce la résonance, dans lequel ladite branche de contrôle (C5) possède un commutateur de contrôle (S2) qui lui est couplé, qui peut être contrôlé (12) pour mettre à la masse ladite branche de contrôle (C5) pour un fonctionnement en sommeil,
la configuration étant **caractérisée en ce que** cette configuration comprend un commutateur d'économie d'énergie (S1) interposé après ladite branche d'excursion haute (R2, C9) et avant le point milieu dudit circuit diviseur RC (R2, C9, C5), ledit commutateur d'économie d'énergie (S1) pouvant être actionné pour découpler ladite branche d'excursion haute (R2, C9) et ladite branche de contrôle (C5) dudit circuit diviseur RC (R2, C9, C5) pour empêcher qu'un courant ne passe dans ladite branche d'excursion haute (R2, C9) dudit diviseur de tension (R2, C9, C5) en évitant ainsi une absorption de puissance dans celui-ci pendant le fonctionnement en sommeil.

2. La configuration de la revendication 1, dans laquelle ledit commutateur d'économie d'énergie (S1) est un commutateur à semi-conducteur, tel qu'un MOSFET.

3. La configuration de l'une des revendications 1 ou 2, comprenant un processeur (12) pour contrôler ledit commutateur de contrôle (S2) et ledit commutateur d'économie d'énergie (S1) via des signaux synchronisés (GP4, GP1) envoyés audit commutateur de contrôle (S2) et audit commutateur d'économie d'énergie (S1).

4. La configuration de la revendication 3, dans laquelle ledit processeur (12) est sensible à un signal de contrôle extérieur (GP0) représentatif d'un pilotage souhaité par un utilisateur dudit convertisseur électronique demi-pont (HB), ledit processeur (12) étant configuré pour contrôler ledit commutateur de contrôle (S2) et ledit commutateur d'économie d'énergie (S1) en fonction dudit signal de contrôle extérieur (GPO).

5. La configuration de la revendication 3, dans laquelle ledit processeur (12) est sensible à un signal de charge représentatif de la charge dudit convertisseur électronique demi-pont (HB), ledit processeur (12) étant configuré pour contrôler ledit commutateur de contrôle (S2) et ledit commutateur d'économie d'énergie (S1) en fonction dudit signal de charge (GPO).

6. La configuration de l'une des revendications précédentes, dans laquelle ledit processeur (12) est configuré pour envoyer audit commutateur d'économie d'énergie (S1) à la fois un signal d'alimentation et un signal de commutation (GP1) pour produire la commutation dudit commutateur d'économie d'énergie (S1).

7. La configuration de l'une des revendications précédentes, comprenant un commutateur supplémentaire (Q1) pour produire la commutation dudit commutateur d'économie d'énergie (S1).

8. La configuration de la revendication 7, dans laquelle ledit commutateur supplémentaire (Q1) est un transistor bipolaire commutable vers un état de coupure pour actionner ledit commutateur d'économie d'énergie (S1) pour découpler ladite branche d'excursion haute (R2, C9) et ladite branche de contrôle (C5) dudit circuit diviseur RC (R2, C9, C5) pour empêcher qu'un courant ne passe dans ladite branche d'excursion haute (R2, C9) dudit diviseur de tension (R2, C9, C5).

9. La configuration de l'une ou l'autre des revendications 7 ou 8, comprenant un réseau RC interposé entre ledit commutateur supplémentaire (Q1) et ledit commutateur d'économie d'énergie (S1) de sorte que ledit commutateur supplémentaire (Q1) :
- lorsqu'il est conducteur, permette la charge du condensateur (C) dudit réseau RC à une tension maintenant fermé ledit commutateur d'économie d'énergie (S1), et
- lorsqu'il est non conducteur, fasse en sorte que le condensateur (C) dudit réseau RC se décharge au travers de la résistance (R) dans ledit réseau RC pour commuter dans le sens de l'ouverture ledit commutateur d'économie d'énergie (S1).

10. Un procédé de pilotage d'un convertisseur électronique demi-pont (HB) au moyen d'une tension de pilotage (Vs) divisée à partir d'un circuit diviseur RC (R2, C9, C5), dans lequel ledit circuit diviseur RC (R2, C9, C5) comprend une branche d'excursion haute (R2, C9) et une branche de contrôle (C5), dans lequel ledit convertisseur demi-pont (HB) est piloté via un diac (10) connecté au point milieu dudit circuit diviseur RC (R2, C9, C5), de sorte que lorsque la chute de tension sur ledit diac (10) atteint sa valeur de seuil, ledit diac (10) allume ledit convertisseur demi-pont et amorce la résonance, le procédé comprenant l'étape consistant à mettre à la masse pour un fonctionnement en sommeil ladite branche de contrôle (C5) dudit circuit diviseur RC (R2, C9, C5),
le procédé étant **caractérisé par** l'étape de découplage, au moyen d'un commutateur d'économie d'énergie (S1) interposé après la branche d'excursion haute (R2, C9) et avant le point milieu dudit circuit diviseur RC (R2, C9, C5), pendant le fonctionnement en sommeil de ladite branche d'excursion hôte (R2, C9) et de ladite branche de contrôle (C5) dudit circuit diviseur RC (R2, C9, C5) pour empêcher qu'un courant ne passe dans ladite branche d'excursion haute (R2, C9) dudit diviseur de tension (R2, C9, C5) en évitant ainsi une absorption de puissance dans celui-ci pendant le fonctionnement en sommeil.
